# EUROPEAN PATENT SPECIFICATION

(11) **EP 1 180 198 B1**
(45) Date of publication and mention of the grant of the patent: **04.06.2008**
(21) Application number: 00937728.4
(22) Date of filing: 24.05.2000
(51) Int. Cl.: F01D 17/14, F01D 17/10, F02B 37/18, F02B 37/22

(54) **CONTROLLABLE EXHAUST GAS TURBOCHARGER WITH A DOUBLE-FLUTED TURBINE HOUSING**
REGELBARER ABGASTURBOLADER MIT EINEM DOPPELSPIRALEINLAUF
TURBOCOMPRESSEUR REGLABLE, ALIMENTE PAR GAZ D'ECHAPPEMENT ET COMPRENANT UN CORPS DE TURBINE A DOUBLE CANNELURE

(30) Priority: 27.05.1999 DE 19924228
(43) Date of publication of application: 20.02.2002
(73) Proprietor: BorgWarner Inc., Auburn Hills, MI 48326-2872 (US)
(72) Inventor: ENGELS, Berthold, D-67256 Weisenheim/Sand (DE); FORSTER, Arno, D-67549 Worms (DE); LINGENAUBER, Robert, D-67227 Frankenthal (DE); JAISLE, Jens-Wolf, D-69126 Heidelberg (DE)
(74) Representative: Lerwill, John
(86) International application number: PCT/US2000/014295
(87) International publication number: WO 2000/073630

(56) References cited:
- DE-A- 4 204 019
- DE-C- 4 303 520
- DE-C- 4 303 521
- GB-A- 1 554 074
- US-A- 4 499 731
- US-A- 4 776 168
- US-A- 4 886 416
- US-A- 5 025 629
- US-A- 5 855 117

## Description

The present invention relates to an exhaust gas-driven turbo-charger as claimed in Claim 1. Such an exhaust gas-driven turbo-charger is known from the publication 'Kraftfahrtechnisches TaschenbuchlBosch' (Pocket book on motor vehicle technology), 21st edition, 1991, page 420 ff.

In exhaust gas-driven turbo-chargers for passenger car engines it is necessary to provide a control of the exhaust gas-driven turbo-charger in order to achieve a near constant boost pressure in the widest possible speed range as a result of the large speed range in passenger car engines. According to the prior art, a control on the exhaust gas side is known in which a portion of the exhaust gas from the engine is guided past the turbine (bypass). The control member required for this purpose can be arranged as a valve or flap. The required control pressure is tapped on the pressure side in the exhaust gas-driven turbo-charger, such that the system of the exhaust gas-driven turbo-charger with the boost pressure control member represents an independent unit.

An energetically more favourable control allows the variable turbine geometry, with which the back pressure behavior of the turbine is charged continuously and thus the entire exhaust gas energy can be used.

From the known embodiments, adjustable guide blades have become generally accepted due to their considerable control range with simultaneously favourable efficiency levels. As a result of the rotary movement of an adjusting ring it is possible to perform an adjustment of the blade angle in a very simple manner. The blades are set to the desired angle either by way of twist cams or directly by way of adjusting levers attached to the blades. Triggering occurs pneumatically by way of an adjusting dashpot with overpressure or underpressure. A microelectronic control can appropriately utilise the advantages of variable turbine geometry by optimal adaptation of the boost pressure over the entire motor diagram.

A variable turbine geometry (VTG), however, constitutes a considerable cost factor, so that in small engines with a smaller piston capacity turbo-chargers with VTG were unable to be generally established.

On the basis of the aforementioned, it is the object of the present invention to provide an exhaust gas-driven turbo-charger of the abovementioned type, which can be used at low cost for smaller engines with a controllable boost pressure.

In US 5025629 there is disclosed an exhaust gas-driven turbo-charger in which two passageways for delivery of exhaust gas to the turbine are separated by a dividing wall and a closure member is movable for movement towards and away from the dividing wall for opening and closing one of the passageways. A separate valve means is provided to prevent flow of gas into the latter passageway when the closure member is adjusted to the closing position.

In accordance with the present invention there is provided an exhaust gas-driven turbo-charger having an adjustable radial turbine which powers a compressor by way of a common shaft, in which the turbine housing defines at least two afflux ports annularly encompassing the turbine wheel having outlets at least partly surrounding the wheel approach of the turbine wheel and being axially offset from each other, the turbo-charger including an annular, axially displaceable coupler for selectively opening and closing the outlet of at least one afflux port, the two afflux ports being separated by an annular partition having a radially inner end presenting an annular sealing surface for cooperation with an annular end sealing surface on the coupler,
characterised in that
the sealing surfaces are conical and taper inwardly in the axial direction in which the coupler is displaced to engage the annular partition for closing the outlet of the at least one afflux port.

An advantage of the invention is that in contrast exhaust gas-driven turbo-chargers with variable turbine geometry no complex adjusting mechanisms are needed to control the direction and the speed of the exhaust gas flow prior to wheel approach, and instead the adjustment of the turbine throughout can be performed by way of a multi-fluted turbine housing, whereby a second afflux port can be switched on successively by means of the coupler. Impacting of the turbine with exhaust gas can accordingly be influenced by means of a simple, annular coupler directly through opening and closing of an afflux port.

A further advantage is that compared to exhaust gas-driven turbo-charger having variable turbine geometry, in which the highest efficiency is achieved only with approximately 50% of the maximum exhaust gas current, in the case of the exhaust gas-driven turbo-charger according to the present invention the highest efficiency occurs with minimal mass flow, that is, with minimal engine speed. This leads to improvement in the engine torque in the lower rpm range, which is particularly desirable in small-volume engines. This effect results in particular from the multi-fluted, preferably double-fluted, design of the exhaust gas-driven turbo-charger, such that when the coupler is closed the single-fluted impinging for low rpm ranges can be optimized and opened successively only with increasing engine speed of the coupler.

In a further embodiment a bypass port can be opened by adjustment of the coupler beyond the open position so that the boost pressure can be restricted. It is to be noted here that adjustment of the boost pressure ratio is enabled both by a rise in throughput by opening of another flute and by a drop in the mass current by opening the bypass, by means of only one servo component, the coupler.

Further advantageous embodiments of the invention will emerge from the sub-claims.

Preferred embodiments of the invention will now be explained hereinbelow with reference to the accompanying diagrams, in which:
- Figure 1: is a longitudinal cross-section of an exhaust gas-driven turbo-charger with contour sleeve and coupler in the closed position,
- Figure 2a: is a scaled-down illustration of the exhaust gas-driven turbo-charger according to Claim 1,
- Figure 2b: shows the exhaust gas-driven turbo-charger according to Figure 2a with coupler in the open position,
- Figure 2c: shows the exhaust gas-driven turbo-charger according to Figure 2a with coupler in the bypass position,
- Figure 3a: is a cutout longitudinal section of an exhaust gas-driven turbo-charger with sleeveless coupler control in the closed position, and
- Figure 3b: shows the exhaust gas-driven turbo-charger according to Figure 3a with coupler in the bypass position,

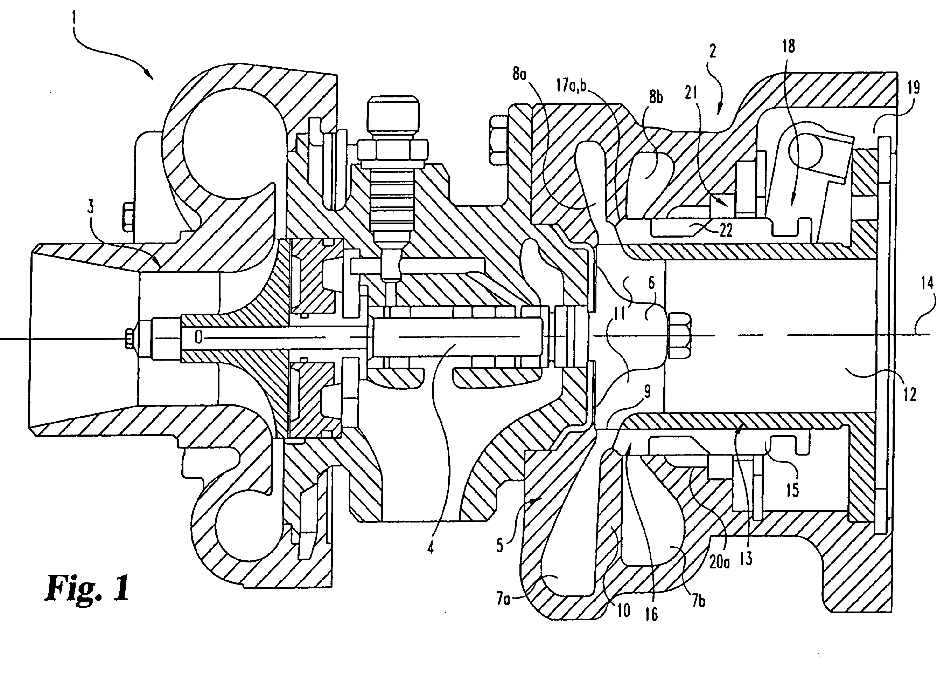

Figure 1 illustrates a exhaust gas-driven turbo-charger having a turbine 2 and a compressor 3 powered by turbine 2, both of which are designed in a radial structure. Turbine 2 and compressor 3 are mounted on a common shaft 4.

Turbine 2 utilises the energy contained in the exhaust gas to drive compressor 3 which sucks in fresh air and pushes pre-compressed air into the cylinder of the diesel engine, not illustrated here. In terms of fluid technics, exhaust gas-driven turbo-charger 1 is coupled to the engine only by the air and exhaust gas mass current. Its engine speed is dependent not on the engine speed, rather on the power-weight ratio between turbine 2 and compressor 3.

A double-fluted turbine housing 5 surrounds turbine wheel 6. Integral components of turbine housing 5 are both afflux ports 7a and 7b arranged axially at a distance from one another and whose outlets 8a and 8b concentrically surround wheel approach 9 inside turbine wheel 6 almost over its entire circumference. Both afflux ports 7a and 7b are separated from one another by a radially extending partition 10 of turbine housing 5. The current of exhaust gas exiting from outlets 8a and 8b impacts wheel approach 9, which is formed by the radially outer ends of blades 11 of turbine wheel 6, whereby its blank lends a cylindrical outer contour to the wheel approach. Blades 11 exhibit a curved blank, such that the exhaust gas leaves turbine wheel 6 on a diameter lying radially further inwards. The exhaust gas flow then enters downstream exhaust gas port 12 of radial turbine 2 which is formed by a tubular contour sleeve 13, arranged coaxially to axis 14 of exhaust gas-driven turbo-charger 1. The downstream end of contour sleeve 13 presents a curved blank, such that the contour sleeve conforms to the curved section of blades 11. The external diameter of the cylindrical outer circumference of contour sleeve 13 approximately the same diameter as the diameter of wheel approach 9, such that contour sleeve 13 lies flush with wheel approach 9.

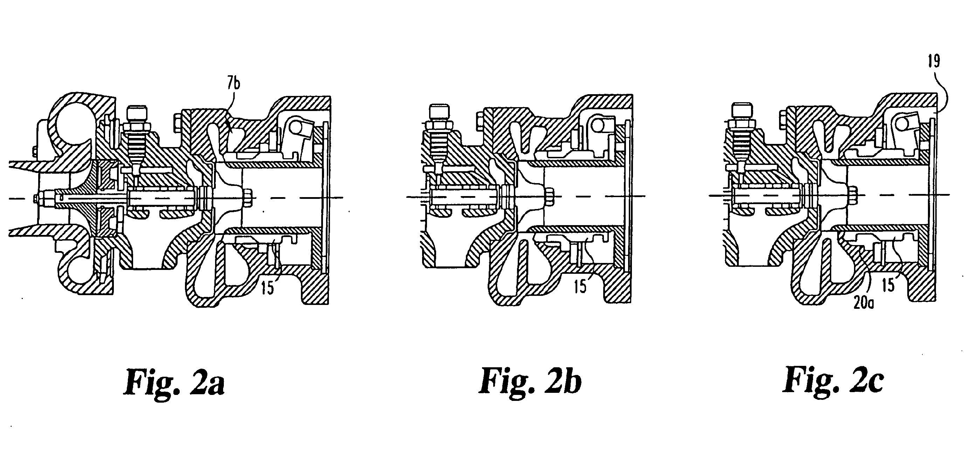

For opening and closing downstream afflux port 7b or its outlet 8b the radial turbine has an annular, axially displaceable coupler 15 which is illustrated in its closed position in Figure 1 and Figure 2a. Coupler 15, disposed coaxially to axis 14, encloses contour sleeve 13 concentrically and slides on its cylindrical external profile in its adjustment position in an axial direction. For this purpose coupler 15 is coupled by its downstream end to a drive 16 controlled according to boost pressure. For sealing off downstream afflux port 7b, coupler 15 has on its end on the afflux side a closure head 16 having a conical sealing surface 17a, which in turn cooperates with a conically formed sealing surface 17b of partition 10. In its closed position closure head 16 completely covers over outlet 8b, effectively preventing the escape of exhaust gas from afflux port 7b. In addition, closure head 16 exhibits a cylindrical section connecting to sealing surface 17a. Should the gas throughput for maintaining a preset boost pressure ratio now be increased, coupler 15 is displaced in a downstream direction, resulting in release of outlet 8b and clearing the way for the exhaust gas flow to wheel approach 9. This open position is shown in Figure 2b.

In order to avoid exceeding the highest permissible boost pressure with increasing engine speed, the exhaust gas-driven turbo-charger exhibits a bypass port 19 whose connection to both flutes joining up directly in front of wheel approach 9 is released by means of further downstream displacement of coupler 15. In this bypass position of coupler 15 illustrated in Figure 2c its closure head 16 frees up a recess 20a on the housing side. For annular seal 21 to be flowed around downstream of recess 20a in the direction of bypass port 19, coupler 15 also presents a circular groove 22 downstream of closure head 16 so that bypass port 19 is finally connected at least with the exhaust gas flow of afflux port 7b by means of groove 22 and recess 20.

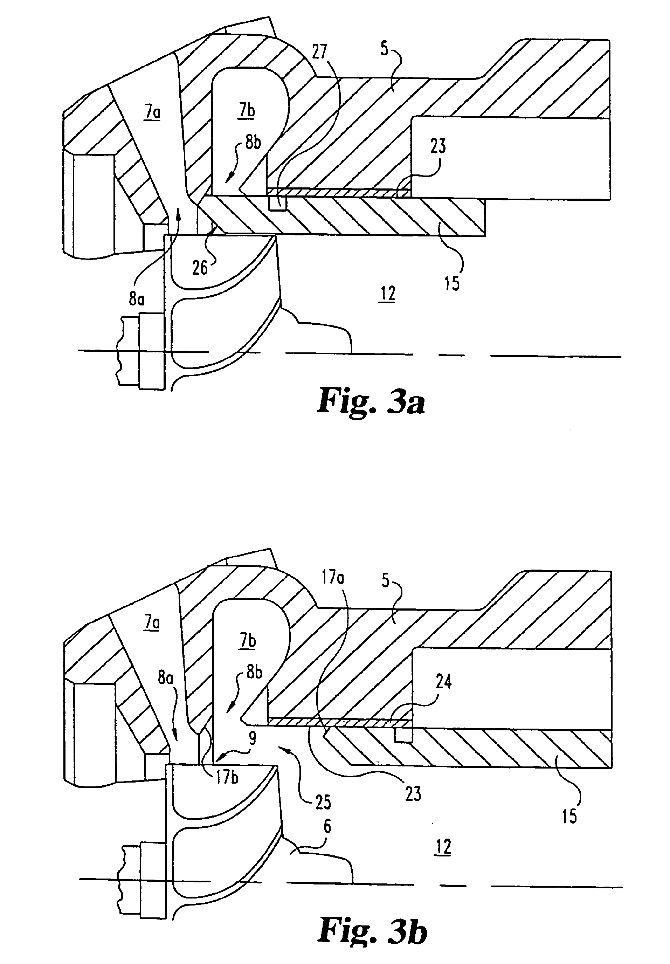

Figures 3a and 3b illustrate an alternative embodiment of exhaust gas-driven turbo-charger 1 without the design of a contour sleeve. The function of the contour sleeve is replaced here entirely by the tubular design of coupler 15, such that longitudinally displaceable coupler 15 disposed coaxially also to axis 14 forms exhaust gas port 12.

Turbine wheel 6 is designed with a so-called '100% contour', that is, wheel approach 9 extends essentially over the entire axial depth of turbine wheel 6. Wheel approach 9 is disposed at a radial distance opposite outlets 8a and 8b, as well as opposite a cylindrical section - coupler guide 23. Coupler guide 23 exhibits a bushing 24 for axially displaceable guiding of coupler 15 and for sealing. As illustrated in Figure 3, both the outer and the inner diameter of sleeve-shaped coupler 15 is matched to the diameter of coupler guide 23 and to the outer diameter of wheel approach 9 such that when the coupler is in its closed state closure head 16 of coupler 15 seals off both afflux port 7b or its outlet 8b and tightly seals off gap 25 resulting from the radial clearance of wheel approach 9 from coupler guide 23. In addition to this, closure head 16 is essentially designed as the closure head in Figure 1, so that sealing surfaces 17a and 17b cooperate with one another and closure head 16 seals off outlet 8b when the coupler is in the closed position, as is illustrated in Figure 3a.

In the closed state coupler 15 covers over wheel approach 9 in an axial section. With successive opening of coupler 15 in the downstream direction closure head 16 releases outlet 8b, allowing the flow of downstream afflux port 7b to impact turbine wheel 6. Likewise, the gap between wheel approach 9 and coupler guide 23 remains closed when outlet 8b is fully freed up by covering over of wheel approach 9. Only through further downstream displacement of coupler 15 does the closure head free the gap, so that a portion of the exhaust gas flow-the discharging-is no longer discharged as illustrated in Figure 1 around coupler 15, rather inside the coupler.

In order to guarantee optimum impacting of wheel approach 9 by downstream afflux port 7a, closure head 16 presents a conically tapering inlet 26, by means of which a dead normal path is avoided. To ensure imperviousness between turbine housing 5 and coupler 15 a piston ring cooperating tightly with coupler guide 23 is provided in the downstream connection on the closure head. Haynes alloy is used as material for this piston ring to guarantee the required elasticity in maximum operating temperatures. For optimum combined effect between piston ring 27 and bushing 24, the bushing is manufactured from the material Brico PMS 2600 which has not only the necessary temperature and corrosion endurance, but also the lubrication capacity. The solid seat of bushing 24 is ensured by means of a press fit. In contrast to the coupler illustrated in Figure 1, the coupler according to Figures 3a and 3b is designed from the material Brico PMS 2600 instead of the casting material Inconell 713C. This effectively dispenses with the costly casting process required for Inconell.

### Legend

- 1: exhaust gas-driven turbo-charger
- 2: turbine
- 3: compressor
- 4: shaft
- 5: turbine housing
- 6: turbine wheel
- 7a, b: afflux port
- 8a, b: outlet
- 9: wheel approach
- 10: partition
- 11: blade
- 12: exhaust port
- 13: contour sleeve
- 14: axis
- 15: coupler
- 16: closure head
- 17a, b: sealing surface
- 18: drive
- 19: bypass port
- 20a, b: recess
- 21: annular seal
- 22: groove
- 23: coupler guide
- 24: bushing
- 25: gap
- 26: inlet
- 27: piston ring

## Claims

1. An exhaust gas-driven turbo-charger having an adjustable radial turbine (2) which powers a compressor (3) by way of a common shaft (4), in which the turbine housing (5) defines at least two afflux ports (7a, 7b) annularly encompassing the turbine wheel (6) having outlets (8a, 8b) at least partly surrounding the wheel approach (9) of the turbine wheel (6) and being axially offset from each other, the turbo-charger including an annular, axially displaceable coupler (15) for selectively opening and closing the outlet (8b) of at least one afflux port (7b),
the two afflux ports (7a, 7b) being separated by an annular partition (10) having a radially inner end presenting an annular sealing surface (17b) for cooperation with an annular end sealing surface (17a) on the coupler (15),
**characterised in that**
the sealing surfaces (17a, 17b) are conical and taper inwardly in the axial direction in which the coupler (15) is displaced to engage the annular partition (10) for closing the outlet (8b) of the at least one afflux port (7b).

2. An exhaust gas-driven turbo-charger as claimed in 1, wherein coupler (15) extends axially over an axial section of the wheel approach (9) when the coupler is closing at least one of the afflux ports (7a, 7b).

3. An exhaust gas-driven turbo-charger as claimed in claim 1 or 2, wherein the coupler (15) defines a conical inlet surface (26) radially inwardly of the end sealing surface (17a) and tapering in the opposite direction thereto.

4. An exhaust gas-driven turbo-charger as claimed in claim 1, 2 or 3, in which the turbine housing defines a cylindrical guide surface (23) downstream of the turbine (2), the guide surface including a bushing (24) against which the coupler (15) axially slides.

5. An exhaust gas-driven turbo-charger as claimed in claim 4, wherein the coupler (15) includes a radial piston ring (27) that bears against said bushing (24) in sealing relation.

6. An exhaust gas-driven turbo-charger according to any one of claims 1 to 5, wherein the coupler is movable axially beyond a position in which outlets (8a, 8b) of the afflux ports (7a, 7b) are fully open to open a bypass flow path allowing exhaust gas to flow from the turbine housing without influencing the turbine wheel.

7. An exhaust gas-driven turbo-charger according to any one of claims 1 to 5, wherein the turbine housing (5) defines a bypass port (19) axially downstream from afflux ports (7a, 7b); and
the coupler (15) and the turbine housing (5) cooperate to define a bypass flow path only when the coupler (15) is in a bypass position.

8. An exhaust gas-driven turbo-charger as claimed in claim 7, wherein when the coupler (15) is in said bypass position the outlets (8a, 8b) are opened by the coupler (15).

9. An exhaust gas-driven turbo-charger as claimed in claim 7 or 8, wherein said bypass flow path includes a recess (20a) defined in the coupler (15).

10. An exhaust gas-driven turbo-charger as claimed in claim 7, 8 or 9, wherein bypass flow path is radially outboard of the coupler (15).

11. An exhaust gas-driven turbo-charger as claimed in any one of claims 7 to 10, wherein a seal is disposed between the turbine housing (5) and the coupler (15) and contacts the coupler (15) in the closed position, while a recess (20a) formed in the coupler breaks the contact seal, with the coupler (15) in the bypass position, and unblocks the connection to the bypass port (19).

## Patentansprüche

1. Abgasturbolader mit einer regelbaren Radialturbine (2), die über eine gemeinsame Welle (4) einen Verdichter (3) antreibt, wobei das Turbinengehäuse (5) mindestens zwei Zuströmkanäle (7a, 7b) definiert, die das Turbinenrad (6) ringförmig umgeben und deren Austrittsöffnungen (8a, 8b) den Radeintritt (9) des Turbinenrads (6) zumindest teilweise umgeben und axial voneinander versetzt sind, wobei der Turbolader einen ringförmigen, axial verschiebbaren Koppler (15) zum gezielten Öffnen und Schließen der Austrittsöffnung (8b) mindestens eines Zuströmkanals (7b) enthält,
wobei die beiden Zuströmöffnungen (7a, 7b) durch eine ringförmige Trennwand (10) voneinander getrennt sind, deren radial innen liegendes Ende eine ringförmige Dichtfläche (17b) zum Zusammenwirken mit einer ringförmigen Enddichtfläche (17a) des Kopplers (15) aufweist,
**dadurch gekennzeichnet, dass**
die Dichtflächen (17a, 17b) konisch sind und sich in der Axialrichtung nach innen verjüngen, in der der Koppler (15) verschoben wird, um die ringförmige Trennwand (10) zum Schließen der Austrittsöffnung (8b) des mindestens einen Zuströmkanals (7b) in Eingriff zu nehmen.

2. Abgasturbolader nach Anspruch 1, wobei sich der Koppler (15) axial über einen axialen Abschnitt des Radeintritts (9) erstreckt, wenn der Koppler mindestens einen der der Zuströmkanäle (7a, 7b) schließt.

3. Abgasturbolader nach Anspruch 1 oder 2, wobei der Koppler (15) eine konische Eintrittsfläche (26) radial einwärts der Enddichtungsfläche (17a) definiert, die sich in der entgegengesetzten Richtung dazu verjüngt.

4. Abgasturbolader nach Anspruch 1, 2 oder 3, wobei das Turbinengehäuse eine zylindrische Führungsfläche (23) stromabwärts der Turbine (2) definiert, wobei die Führungsfläche eine Buchse (24) enthält, an der der Koppler (15) axial gleitet.

5. Abgasturbolader nach Anspruch 4, wobei der Koppler (15) einen Radialkolbenring (27) enthält, der in Dichtungsbeziehung an der Buchse (24) anliegt.

6. Abgasturbolader nach einem der Ansprüche 1 bis 5,
wobei der Koppler axial über eine Position hinaus beweglich ist, in der die Austrittsöffnungen (8a, 8b) der Zuströmkanäle (7a, 7b) ganz geöffnet sind, um einen Bypassströmungsweg zu öffnen, der es dem Abgas gestattet, von dem Turbinengehäuse zu strömen, ohne das Turbinenrad zu beeinflussen.

7. Abgasturbolader nach einem der Ansprüche 1 bis 5,
wobei das Turbinengehäuse (5) einen Bypasskanal (19) axial stromabwärts der Zuströmkanäle (7a, 7b) definiert; und
der Koppler (15) und das Turbinengehäuse (5) zusammenwirken, um nur dann einen Bypassströmungsweg zu definieren, wenn sich der Koppler (15) in der Bypassstellung befindet.

8. Abgasturbolader nach Anspruch 7, wobei die Austrittsöffnungen (8a, 8b) durch den Koppler (15) geöffnet werden, wenn sich der Koppler (15) in der Bypassstellung befindet.

9. Abgasturbolader nach Anspruch 7 oder 8, wobei der Bypassströmungsweg eine im Koppler (15) definierte Ausnehmung (20a) enthält.

10. Abgasturbolader nach Anspruch 7, 8 oder 9, wobei sich der Bypassströmungsweg radial außerhalb des Kopplers (15) befindet.

11. Abgasturbolader nach einem der Ansprüche 7 bis 10,
wobei eine Dichtung zwischen dem Turbinengehäuse (5) und dem Koppler (15) angeordnet ist und den Koppler (15) in der geschlossenen Stellung berührt, während eine im Koppler ausgebildete Ausnehmung (20a) die Kontaktdichtung unterbricht, wenn sich der Koppler (15) in der Bypassstellung befindet, und die Verbindung zum Bypasskanal (19) freigibt.

## Revendications

1. Turbocompresseur entraîné par les gaz d'échappement comprenant une turbine radiale réglable (2) qui entraîne un compresseur (3) par le biais d'un arbre commun (4), dans ce turbocompresseur le carter de turbine (5) définit au moins deux orifices d'afflux (7a, 7b) enveloppant de façon annulaire la roue de turbine (6) ayant des sorties (8a, 8b) entourant au moins partiellement l'approche de roue (9) de la roue de turbine (6) et étant décalées axialement l'une par rapport à l'autre, le turbocompresseur comprenant un accouplement annulaire, déplaçable axialement (15) pour ouvrir et fermer sélectivement la sortie (8b) d'au moins un orifice d'afflux (7b),
les deux orifices d'afflux (7a, 7b) étant séparés par une cloison annulaire (10) comportant une extrémité radialement intérieure présentant une surface d'étanchéité annulaire (17b) destinée à coopérer avec une surface d'étanchéité d'extrémité annulaire (17a) sur l'accouplement (15),
**caractérisé en ce que**
les surfaces d'étanchéité (17a, 17b) sont coniques et s'effilent vers l'intérieur dans la direction axiale dans laquelle l'accouplement (15) est déplacé pour être mis en engagement avec la cloison annulaire (10) afin de fermer la sortie (8b) d'au moins un orifice d'afflux (7b).

2. Turbocompresseur entraîné par les gaz d'échappement selon la revendication 1, dans ce turbocompresseur l'accouplement (15) s'étend axialement sur une section axiale de l'approche de roue (9) quand l'accouplement ferme au moins un des orifices d'afflux (7a, 7b).

3. Turbocompresseur entraîné par les gaz d'échappement selon la revendication 1 ou 2, dans ce turbocompresseur l'accouplement (15) définit une surface d'entrée conique (26) radialement intérieure à la surface d'étanchéité d'extrémité (17a) et s'effilant dans la direction opposée à celle-ci.

4. Turbocompresseur entraîné par les gaz d'échappement selon la revendication 1, 2 ou 3, dans ce turbocompresseur le carter de turbine définit une surface de guide cylindrique (23) en aval de la turbine (2), la surface de guide comprenant un coussinet (24) contre lequel l'accouplement (15) coulisse axialement.

5. Turbocompresseur entraîné par les gaz d'échappement selon la revendication 4, dans ce turbocompresseur l'accouplement (15) comprend un segment radial (27) qui porte contre ledit coussinet (24) dans une relation d'étanchéité.

6. Turbocompresseur entraîné par les gaz d'échappement selon l'une quelconque des revendications 1 à 5, dans ce turbocompresseur l'accouplement peut se déplacer axialement au-delà d'une position dans laquelle les sorties (8a, 8b) des orifices d'afflux (7a, 7b) sont entièrement ouvertes pour ouvrir un chemin d'écoulement de dérivation permettant aux gaz d'échappement de s'écouler du carter de turbine sans influencer la roue de turbine.

7. Turbocompresseur entraîné par les gaz d'échappement selon l'une quelconque des revendications 1 à 5, dans ce turbocompresseur le carter de turbine (5) définit un orifice de dérivation (19) axialement en aval des orifices d'afflux (7a, 7b) ; et
l'accouplement (15) et le carter de turbine (5) coopèrent pour définir un chemin d'écoulement de dérivation uniquement quand l'accouplement (15) et dans une position de dérivation.

8. Turbocompresseur entraîné par les gaz d'échappement selon la revendication 7, dans ce turbocompresseur quand l'accouplement (15) est dans ladite position de dérivation les sorties (8a, 8b) sont ouvertes par l'accouplement (15).

9. Turbocompresseur entraîné par les gaz d'échappement selon la revendication 7 ou 8, dans ce turbocompresseur ledit chemin d'écoulement de dérivation comprend une découpe (20a) définie dans l'accouplement (15).

10. Turbocompresseur entraîné par les gaz d'échappement selon la revendication 7, 8 ou 9, dans ce turbocompresseur le chemin d'écoulement de dérivation est radialement extérieur à l'accouplement (15).

11. Turbocompresseur entraîné par les gaz d'échappement selon l'une quelconque des revendications 7 à 10, dans ce turbocompresseur un joint d'étanchéité est disposé entre le carter de turbine (5) et l'accouplement (15) et est en contact avec l'accouplement (15) dans la position fermée, tandis qu'une découpe (20a) aménagée dans l'accouplement casse le contact d'étanchéité, avec l'accouplement (15) dans la position de dérivation, et débloque la connexion à l'orifice de dérivation (19).
